# EUROPEAN PATENT APPLICATION

(11) **EP 2 006 780 A1**
(43) Date of publication of application: **24.12.2008**
(21) Application number: 07110794.0
(22) Date of filing: 21.06.2007
(51) Int. Cl.: G06F 17/30

(54) **Modular search framework**

(71) Applicant: France Télécom, 75015 Paris (FR)
(72) Inventor: Alom, Saiful, London, E12 5PW (GB); Chaudhry, Kashif, London, SW16 5SR (GB)
(74) Representative: Cabinet Plasseraud

(57) **Abstract**

The present invention relates to a method of searching content by a communication device comprising at least one search module, the search module being specific to a data type and/or to data location. In the method a search request is received, the search request including specific parameters. Then a first function is applied to the specific parameters for choosing (209) at least one of the search modules; and for initialising the search. Then a second function is used for running (213, 217) the chosen search modules for obtaining a search result based on the specific parameters.

## Description

### TECHNICAL FIELD

The present invention relates to a method of searching for content locally and/or remotely. Remote searches may be performed on devices, such as phones, personal digital assistants (PDA), laptops, desktops and servers. A local search would be things like contacts, pictures, music, and any items that are on the current device. Performing a remote search would involve searching the Internet, networks, and other devices. The invention also relates to a corresponding device capable of performing the search, communication system and software program product.

### BACKGROUND OF THE INVENTION

Devices of all kinds, such as mobile phones, MP3 players etc, may have large amounts of storage space. The content is of varying types. Examples of different content types are music, video, contact information, pictures etc. It becomes important to be able to search for a particular item as a manual search becomes tedious and time consuming.

Searching for content is a common task that is required due to the vast amounts of data available. The content can be data in a database, on the Internet, on a personal computer, or on a variety of mobile devices. There are search engines available to search content on the Internet, such as Google^{™}, Yahoo^{™} and MSN^{™}. These companies have also provided search applications for desktop computers and also for mobile devices. So far there have not been many search applications provided for searching data on a mobile handset, except for high end PDAs.

Currently available search applications have various limitations. They are focused on external searches and do not search the content on a mobile device. Existing mobile search applications are limited to only searching for specific content on a mobile device. In most cases a user can only search for contacts on their mobile phone. It is not possible to search for other data types stored on a phone, e.g. notes, music, video, ringtones, and pictures. The current search applications that are provided do limited searches. There are those that provide external searches only, such as Google^{™}, Yahoo!^{™} and Yell.com^{™}.

Current search applications provide content searches but are limited in the type of data they can search. If a new application or data source is added, it would require the search application to be extended, or in the case of the PDAs, the applications have to ensure the search application is able to search their specific content by adhering to the application programming interface (API) provided by the particular PDA platform.

Furthermore, current search applications are unable to search multiple devices simultaneously and most search applications are dedicated to searching on the device or data source they are being used upon and are not extensible. Moreover, current search applications often have a large footprint and require time to setup and use.

A typical desktop search application initially indexes everything on the user's PC and is not ready for searching until this has been completed thereby slowing the first initial search. These applications are usually very large and are not really practical on resource constrained devices such as mobile phones.

Therefore, to overcome the above-identified limitations, there is a need for an improved search method that is able to search for any disparate unrelated data locally and remotely on any platform.

### SUMMARY OF THE INVENTION

According to a first aspect of the invention there is thus proposed a method of searching content as recited in claim 1.

The proposed method allows searching of varying content on any device, locally and/or remotely. The method provides a lightweight solution ideal for constrained devices. In the solution only one core is needed with a common interface. Any type of data can be handled whilst maintaining a common interface. Furthermore, the solution is an abstraction conducive to expandability such as security and persistence. Moreover, the solution offers inherent scalability and stability.

The search modules can be deployed over the air, or transferred across when new applications and services are added. The search modules may be dynamically discovered, allowing for extensibility.

According to a second aspect of the invention there is further provided a computer program product comprising instructions for implementing the method according to the first aspect of the invention, when loaded and run on computer means of a device capable of performing the search.

According to a third aspect of the invention there is provided a device capable of performing the search as recited in claim 14.

### BRIEF DESCRIPTION OF THE DRAWINGS

Other features and advantages of the invention will become apparent from the following description of non-limiting exemplary embodiments, with reference to the appended drawings, in which:
- Figure 1 is a simplified block diagram of a device according to an embodiment of the invention capable of performing the search;
- Figure 2 is a flow chart depicting a search method according to an embodiment of the invention;
- Figure 3 is a simplified block diagram of a device that includes local data to be searched;
- Figure 4 is a flow chart depicting a search method for searching local data according to an embodiment of the invention;
- Figure 5 is a simplified block diagram of a remote data server and a device capable of performing the search;
- Figure 6 is a flow chart depicting a search method for searching for data in a remote source according to an embodiment of the invention;
- Figure 7 is a block diagram showing two search devices connected together; and
- Figure 8 is a block diagram showing several search devices connected together for performing a chained search.

### DETAILED DESRIPTION OF EMBODIMENTS OF THE INVENTION

In the following description some non-limiting embodiments of the invention will be described in more detail with reference to the appended figures.

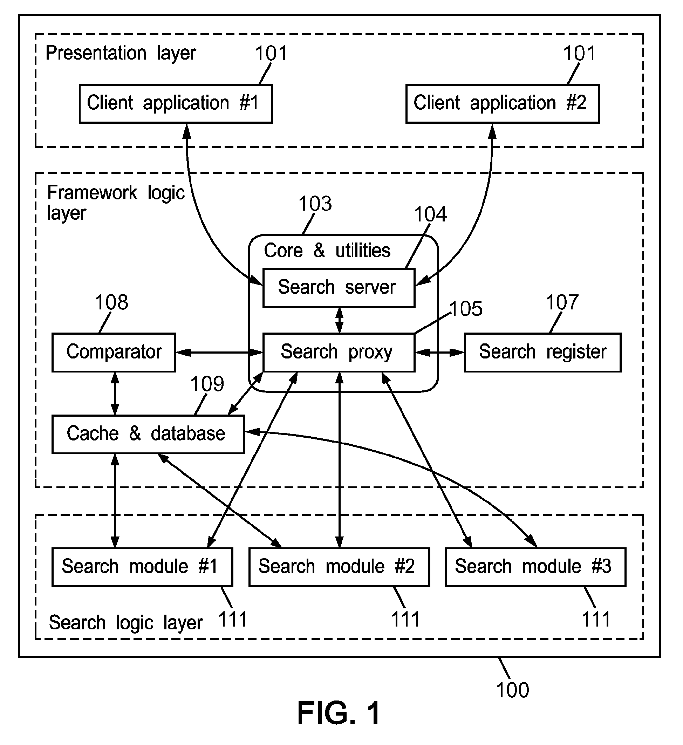

Figure 1 shows an example of a device 100 capable of performing a search in accordance with embodiments of the present invention. The device 100 can be understood to form a modular distributed search framework, which consists of three major layers: the presentation layer, framework logic layer and the search logic layer. The presentation layer consists of a user interface or client specific code. In Figure 1, the presentation layer is shown to consist of two client applications 101. The presentation layer can be any search client application or even another modular distributed search framework where a search module acts as a client. In Figure 1 only elements relevant for understanding the present invention are shown.

The framework logic layer consists of a common core & utilities 103, search register 107, comparator 108 and cache and database 109. The core & utilities 103 contain the logic for processing the requests for both the search clients and search modules and it contains two elements: a search server 104 and a search proxy 105. The search server 104 serves as a client interface toward the client applications 101. The search register 107 is arranged to discover and register the search modules 111. The cache and database 109 functionality is provided in the framework logic layer with a common interface. It is the responsibility of the individual search modules 111 to use the interface for caching and indexing their data. In Figure 1 the search modules 111 are shown to be an integral part of the device 100, but the search modules 111 could also be external components that can be connected to the device 100 and easily removed if needed.

The search register 107 is a singleton module. It is responsible for discovering and maintaining a list of search modules 111 available to the modular distributed search framework. It also provides a list of the modules used by the search proxy 105 thereby providing a means to return an instance of a particular module.

The cache and database 109 or simply database 109 provides its own application programming interface (API) abstracting actual database APIs. This ensures that the search framework is database independent, i.e. different databases can be used if required. The database 109 can be then used by the modular distributed search framework for caching, indexing and for other requirements. It is intended to be used independently by the search modules 111. The search modules 111 are responsible for caching and indexing, if required. The database 109 may be connected to all framework modules. It is to be noted that the search modules 111 are not restricted to using the database 109 provided and may choose to use something completely independent of the framework logic layer for caching, indexing and for other purposes.

The search logic layer consists of search modules 111. These modules are dynamically discovered and registered by the core and therefore allow for extensibility. Individual modules 111 are written to cope with a particular data source or type of data source and provide a common interface to the core. The common interface means that any module developed is instantly searchable without having to rewrite search framework or application code. The data sources could be on the device or external, the framework logic layer does not require specific knowledge of what data source the module 111 is searching, only that it returns the data when requested in a consistent format. As can be seen from Figure 1, there is a direct relationship between the search modules 111 and the search proxy 109. Furthermore, in this example the search proxy 105 is also connected to the cache and database 109.

The modular architecture of the modules 111 means that the client does not need to know how to perform a search, hence speeding up development time for applications. It simply provides a search pattern. Modules 111 allow code reuse across different client applications and frameworks. If the data source being searched is the same, the search module 111 can be transferred and the solution is simple plug and play.

The client applications 101, as part of the presentation layer, provide the means by which clients communicate with the framework and initiate searches. By using a common client interface, client applications need not be aware of the specific search modules 111 available. The search register 107 is used to discover and load the available modules 111. The search proxy 105 accepts search requests from the client application interface and delegates them to the search modules 111. This is achieved by the search proxy 105 iterating through the list of modules 111 maintained within the search register 107.

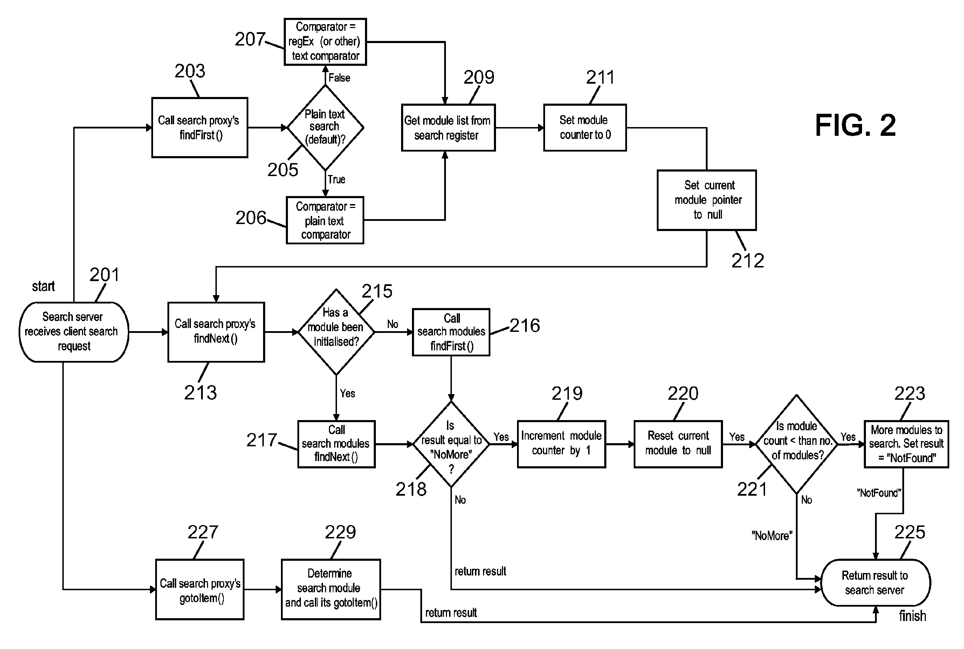

The flowchart of Figure 2 gives an overview of how the core components work within the search framework when a request is received from a search client, i.e. from a search application 101. Different components shown in the flow chart are later explained in more detail.

In step 201, the search server 104 receives a search request from the client and determines the type of the request. The search client can send three types of requests: findFirst(), findNext(), and gotoItem().

The initial request to begin a search is findFirst(). If this request is received, then in step 203 the search server 104 calls the search proxy's 105 findFirst() function. This also means that any existing searches taking place will be stopped immediately. This mechanism provides a way of returning a single result at a time, furthermore any search can be halted easily without having to wait for the search to finish first. Searches can interrupted at any time due to the way the search framework works by responding with one result at any time. This means that there is always a quick response time, the user will see the results build up. Thus some modules 111 with small data sources do not need to index or cache results as they can be gained on the fly.

By design the search framework caters for a search being interrupted at any point. This is also the reason why there are 2 requests, namely the FindFirst() and the FindNext(). Each request retrieves only a single result. FindFirst() will initiate a new search, but to retrieve the results FindNext() requests need to be made until there are no more results. At any point if a FindFirst() request is made a new search is started. Because of this requirement, it makes search interruptible thus saving time and providing a speedy response. There is no need to wait for a search to complete to commence another.

Next in step 205 it is determined whether a plain text search should be performed. If the answer is positive, then in step 206 plain text comparator is chosen. On the other hand is the answer is negative, then another user defined comparator, such as Regular Expressions, is used in step 207. The comparator type is a parameter set by the client when calling the search server 104. It initialises the correct comparator and this is later passed to the individual search modules 111 so that the correct search algorithm is used.

The search proxy 105 then retrieves in step 209 the search modules 111 from the search register 107. This is done based upon a list provided by the client. If the client specifies nothing, the entire list of search modules 111 is returned. Otherwise the search register 107 tries to match the list from the client with existing modules 111 and then provides a list. This list may not include all modules requested if they do not exist. The search register 107 provides a list of modules that are in a specific order and the results are then expected in that order in return. For example, in the scenario where it is implemented on a phone, depending on the segment of the market an operator wants to target will determine the prioritisation of the results. For example, business segment would want contacts first. However, in case of a music oriented phone, then the music results would be given first etc.

Next in steps 211 and 212 some internal variables are initialised. In step 211 the module counter is set or reset to 0. This initialises the module counter so that it will start with the first module on the module list retrieved in step 209. In step 212 the current module pointer is set to null. This ensures that an old search is not continued. Thus a clean slate for a new search is provided. After this the search server 104 calls findNext() function and returns the result obtained from findNext().

Upon receipt of the response from the findFirst() request, the search client will then send a findNext() request to the search server 104. This will call in step 213 the search proxy's findNext() and will use the previous settings to continue the search. It will check in step 215 whether a search module 111 has been initialised. In case, where the module 111 isn't initialised the method selects the module 111 according to the module counter (the module counter should be 0 if findFirst() was called) and current module pointer now points to the relevant module. It then calls the modules' findFirst() method. The first module on the list is then initialised in step 216. If the module 111 has been initialised, then this is a continuing search and therefore, the method calls in step 217 the current modules' findNext() method.

The search module 111 will return one of the following responses:
"NotFound", "NoMore" or result. The search module 111 will return a result, if a match is found. If the search module 111 returns "NotFound" it means that the first piece of data did not match, but there is more data to be searched. Subsequent findNext() requests from the search client will cause it to iterate through this list until the search module 111 returns "NoMore".

The procedure then continues in step 218 by determining whether the result is equal to "NoMore". If the search module 111 returns "NoMore", this means that it has no more data to search through. Then in step 219 the module counter is incremented by 1 and in step 220 the current module 111 is set to NULL to ensure that, if a new module 111 is selected on the next pass of search proxy's 105 findNext(), it calls the search modules' findFirst()). In this case the search proxy 105 checks in step 221, if there are any more search modules 111 to search through, if there are then it modifies in step 223 the result to "NotFound" to indicate to the search server 104 and to the search client 101 that there are more results to come. It sets the current module to the next one on the list obtained from the search register 107. On the other hand, if in step 218 it was determined that the result does not equal to "NoMore", then the result is returned to the search server 104 in step 225. Also if in step 221 it was determined that there are no more modules 111 left, then a result is returned in step 225 to the search server 104. The process will then be repeated until the module list is exhausted and will return "NoMore" to the search server 104.

The request to gotoltem() made by the client occurs after the results have been given. This call is simply passed in step 227 by the search server 104 to the search proxy 105. In step 229 a relevant search module 111 is determined and its gotoltem() is called. Then again in step 225 the result is returned to the search server 104. Using the module name provided, the method locates the instance of that module 111 by calling the search registers' 107 findModule() method. If a valid module is returned, it calls that module's gotoltem() with the data provided by the search proxy 105 (and ultimately by the client). The individual search module 111 knows how to deal with its own data.

Next the different elements present in the flow chart of Figure 2 are explained in more detail. The search server 104 provides the client interface, this allows the clients to communicate with the framework and initiate searches. It provides a common client interface so that a client does not need to be aware of any specific search modules 111 available. It does this by abstracting away from the client the knowledge of the data types and the workings of the search mechanism. It provides a list of methods, namely findFirst(), findNext() and gotoltem() that can be called by the client interface. These methods are consistent throughout the framework and are implemented by the search proxy 105 and the search modules 111.

The search server 104 can be instantiated by the client application 101 or alternatively it can run as a process which can then be accessed using sockets, remote procedure calls (RPC), and any other form of inter process communication (IPC) or protocol that is implemented by the search server 104. This gives the modular distributed search framework the flexibility and extensibility to be implemented anywhere in a manner suited to the needs of the platform. For example on a mobile device it may be easier to implement the search framework as a library. However on the network it runs as separate process. It is up to the requirements of the platform and device, where the modular distributed search framework is being implemented.

On the search server 104, findFirst() is responsible for initiating a new search. It ensures that everything is reset, so that a new clean search can be performed. It then delegates to the search proxy 105 to actually perform the search by calling the appropriate search module 111. This function has the following parameters when run by the search server 104:
- Search pattern - The pattern to search for, this could be a simple string or regular expression or some other pattern that the search allows for searching, such as pictures using pictures;
- Search type - By default set to plain. This indicates whether a search is a normal plain text search, a regular expression search or a specialised search required for a particular data type, e.g. searching for a picture with a picture; and
- Module list - By default set to an empty list. This is a list of the modules it should initiate searches with and the order it should do so. If the list is empty it simply searches through all modules that are available.

The returned values are:
- Result - The actual first match found;
- "NotFound" - When no match has been found but there are still more results to search through; and
- "NoMore" - When there are no more results to be found.

The search server method findNext() returns a single result each time. It is called repeatedly until there are no more results remaining. This also delegates to the search proxy 105 to perform the search by calling the appropriate search module 111. This function does not take in any parameters when run by the search server 104. It returns the following values:
- Result - The next match;
- "NotFound" - When no match was found but there are still more results to search through; and
- "NoMore" - When there are no more results.

Search server method gotoltem() uses the result provided to call the relevant search module 111. The search module interprets the result and then performs an appropriate action e.g. launching an application, retrieving a file etc. The search server 104 simply calls the search proxy 105 method of the same name. This function has the following parameters when run by the search server 104:
- Module name - The name of the module that provided the initial results; and
- Result - This contains the result selected by the client.
The values returned are:
- 0 - returns zero on success; and
- Error - This contains an error message and is defined by the search module 111.

The search proxy 105 is instantiated by the search server 104. It acts as a proxy between the search modules 111, search register 107 and the search server 104. It also implements the three main methods: findFirst(), findNext() and gotoItem(). Search proxy method findFirst() initiates a new search. It is the method called by the search server 104 in its findFirst() method. It determines which comparator 108 to make use of based upon the second parameter, which is by default set to a plain text. It then queries the search register 107 for the modules listed in the 3^{rd} parameter, i.e. module list. Then it initiates the search on the first module 111 that appears on the list and returns a single result. The function findFirst() when run by the search proxy 105 takes the same parameters as when run by the search server 104 and also returns the same values as when run by the search server 104.

Search proxy method findNext() returns a single result each time. It is called repeatedly until there are no more results remaining. This method iterates through the module list initialised by search proxy's findFirst(). For each module 111 it calls the search modules findFirst() with the comparator as the only parameter. The comparator 108 is initialised in search proxy's findFirst() and contains the search pattern. The findNext() function does not take in any parameters and returns the same values as when run by the search server 104.

Search proxy method gotoItem() uses the result provided to call the relevant search module 111. The search module 111 interprets the result and then performs an appropriate action such as launching an application, retrieving a file etc. The search proxy 105 checks if the search module 111 exists and gets a reference to it. It then calls the specific search modules 111 gotoltem() method, passing the result as the only parameter. When the function gotoltem() is run by the search proxy 105 it takes in the same parameters as when run by the search server 104 and also returns the same values as when run by the search server 104.

The comparator 108 is a separate module that does a specific type searching, e.g. using plain text, searching using regular expression or other types of search required. In most cases the plain text search is likely to be used. This allows using a variety of search algorithms that are available. The comparator 108 adheres to a consistent interface. This is to ensure that the search modules 111 do not need to be aware of the search type being used and simply refer to a comparator 108 that is provided by the search proxy 105. The search pattern is already stored within the comparator 108 when initialised by the search proxy 105. The comparator 108 should provide the following methods (for text based searches): search() and getPos(). The search() function takes in a parameter called string. This parameter takes in the string to match against the search pattern, which is already provided when the comparator 108 is instantiated by the search proxy 105. Thus, the comparator 108 does the actual comparison between the searched string and the string in which specific string is searched. It then calls the specific search algorithm in order to perform the search. This function then either returns true or false. If there is a match it returns true, otherwise false. The function getPos() takes no parameters and returns the start and end position of the match in the string. For instance format (3, 5) indicates that the pattern starts on the 3^{rd} character and ends on the 5^{th} character in the string. Thus, the getPos() method simply returns the position of the match found in the string it searched.

Search modules 111 adhere to a common interface and format which allows them to be registered with the framework and allows for communication with the framework. Generally they provide the mechanism by which data sources can be accessed and searched. The two main intended provisions for searching include local data and remote data.

The search modules 111 must adhere to the same interface as the search server 104 and search proxy 105. For this purpose the findFirst(), findNext() and gotoltem() are provided.

A search module 111, due to its specialisation on a particular data type, can also provide content specific advertising and services for the user. It can push specific items that the provider wishes. It can even be made to push a particular service that a company wants their customers to be aware of, even if they have not searched for it explicitly. It would be associated with the search pattern the user has provided. A music search module could provide a service like a gig guide and advertise upcoming events.

The search module 111 returns the result in three parts. The format of the result is [[result], [module name], [internal reference]]. The first part [result] returns the results to be displayed by the client. This could contain the string and the position of the match in that string. The second part [module name] returns the name of the module that returned the result. The third part [internal reference] returns an internal reference required by the module 111 to access the correct item from its data source. For example, this may contain a key to a record in a database table.

Search module method: findFirst() initiates a new search. It is called by the search proxy 105. It initialises the comparator 108 to be used, each new search may use a different comparator 108. It then requests the data from a local or an external source. It may request all the data, especially if it is an external source, and store this internally and for each subsequent call of findNext() it will use this internal store to return results. The database 109 may be used here to store the results. This is particularly useful if the data source is external and a data connection is required to retrieve the data. The search module method findFirst() takes the following parameters:
- Search pattern - The pattern to search for, this could be a simple string or regular expression or some other pattern that the search allows for searching, such as pictures using pictures; and
- Comparator - The reference to the instance of the comparator 108 instantiated by the search proxy 105.
The values returned are:
- Result - The actual first match found;
- "NotFound" - When no match has been found but there are still more results to search through; and
- "NoMore" - When there are no more results to be found.

Search module method findNext() returns a single result each time. It is called repeatedly until there are no more results remaining. It uses the comparator 108 provided by search proxy 105 and initialised in the search module's findFirst() and checks to see if the current item being searched matches. It then returns a result. This takes no parameters, it is simply called to return the results based upon the parameters provided via the findFirst() method. The following results are returned:
- Result - the next match found;
- "NotFound" - When no match was found but there are still more results to search through; and
- "NoMore" - When there are no more results.

Search module method gotoltem() uses the result provided to perform an appropriate action such as launching an application, retrieving a file, or whatever the search item when matched is required to do. It does not return anything as it is not required to do so. The parameter set contains only one parameter:
- Result - This contains the result selected by the client.
The values returned are:
- 0 - Returns zero on success; and
- Error - This contains an error message and is defined by the search module 111.

Based on the foregoing, it can be seen that the parameters to which different functions are applied vary depending on which element implements the function.

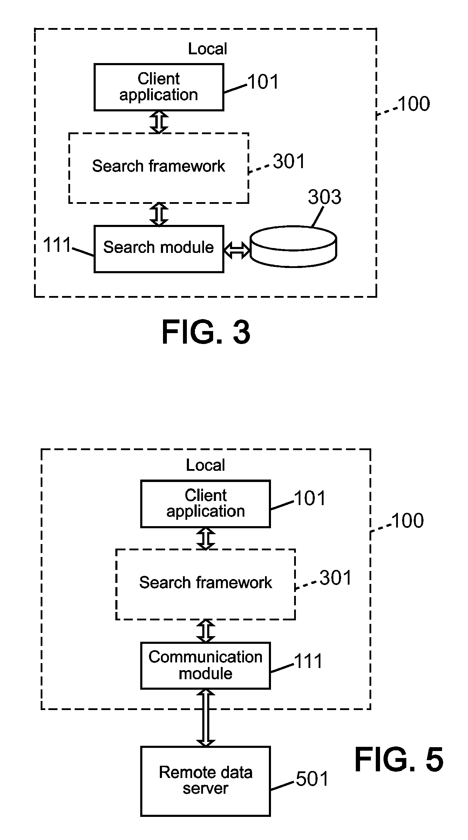

Next a simplified exemplary embodiment is described when local data is searched. Figure 3 illustrates this situation where there is shown a search device 100 comprising the client application 101, search framework 301 containing the elements of the framework logic layer, a search module 111 and a local data source 303, where the data is to be searched. Searching for local data is performed by providing a module 111 which has been implemented to read and filter the data specific format required. The search results are then returned to the client search application 101 via the search framework 301 using the common interface. Data from a target application can be retrieved in this way without the client search application 101 requiring any specific knowledge of the data format.

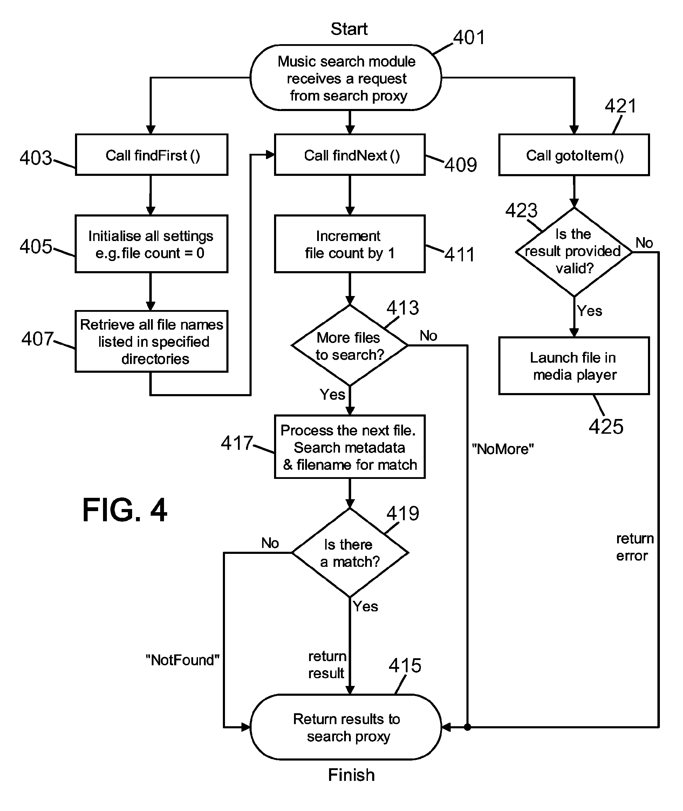

The flow chart of Figure 4 gives an example on how the search module 111 operates. The example demonstrates a search for ringtones for a mobile phone. The device will search for it in a known location provided via a configuration file. The search proxy 105 will send one of three requests to the search module 111: findFirst(), findNext(), and gotoltem(). The flowchart demonstrates how each of these requests is dealt by the search module 111, which in this example is a music search module 111. This module 111 adheres to the interface of the search framework 301.

First in step 401 the search module 111 receives a request from the search proxy 105 and determines the type of the request, i.e. whether it is findFirst(), findNext() or gotoItem(). In case the request is findFirst(), then the search module calls in step 403 the findFirst() function. Then in step 405 all settings are initialised, e.g. file count is set to 0. Next in step 407 the search module 111 retrieves all filenames listed in specified directories. After this in step 409 the search module 111 calls the findNext() function for returning the first set of results and the file count is incremented by 1 in step 411.

Next in step 413 it is determined whether there are more files to be searched. If the response is negative, i.e. there are no more files to be searched, then "NoMore" is returned to the search proxy 105 in step 415. On the other hand if in step 413 it is determined that there are more files to be searched then the procedure continues in step 417 by processing the next file. This means that the metadata and file name are searched for match. Then in step 419 it is determined whether there is a match. If this is the case, then in step 415 the result is returned to the search proxy 105. However, if no match is found, then the "NotFound" is returned to the search proxy 105.

If in step 401 it is determined that the received request is findNext(), then the procedure does not go through steps 403, 405 and 407, but the procedure continues directly in step 409. The findNext() is called either by the findFirst() method or by the search proxy 105.

If in step 401 it is determined that the received request is gotoltem(), then in step 421 the search module calls the gotoltem() function. The request to gotoltem() made by the search proxy 105 occurs after the results have been given. This call is simply passed by the search proxy 105 to the search module 111, which calls the modules gotoltem() method. The method checks in step 423 the data to see if it is valid and, and if it is valid then it performs in step 425 an action specific to the search module 111. In the case of this example, it launches a media player. If something goes wrong, i.e. the media player fails to launch etc, it reports an error. The type of error is defined by the search module itself. The search proxy 105 and the search server 104 merely pass the message on. It is up to the search client to respond to the error as it sees fit.

Searching of a remote data source can be performed by providing a module which handles both the communication required and understands the specific data format. This scenario is shown in Figure 5, where there is shown the search device 100 and an external remote data server 501 containing data to be searched. In this scenario the data is requested by the search module 111 and manipulated within the module 111. The module 111 could be in this case called a communication module to better characterise the operation of the module. The results are then returned to the client application 101 via the search framework 301. This scenario carries the possible disadvantage that unless the protocol supports filtering, potentially all of the source data will be sent from the remote source to the module 111 for manipulation via the communication link. The solution is to have a modular distributed search framework on the remote source thus manipulating the results at the source and only receiving the results that are valid. This is explained later in more detail.

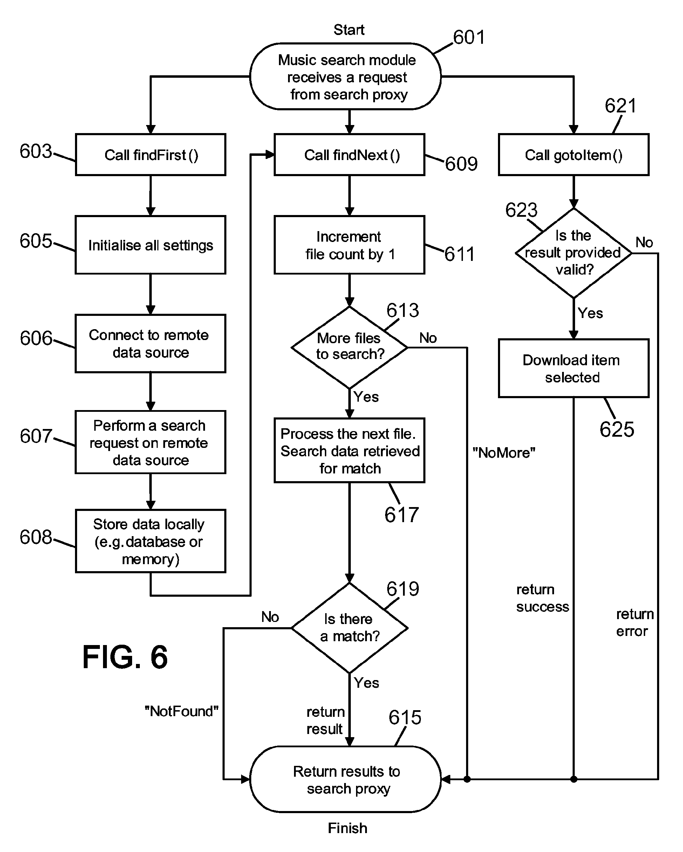

The flow chart of Figure 6 shows an example of a situation where the search device 100 searches for data located on a remote source. This flow chart is very similar to the flow chart of Figure 4, with the exception that the step 407 is replaced with steps 606, 607 and 608. Thus, once the settings have been initialised in step 605, the search module 111 connects in step 606 to the remote server 501 thereby initiating a data connection with the remote data source. In the case of the music search module 111, this could be a portal of a mobile phone operator providing ringtones. Ringtones can be searched for using the universal resource locator (URL) for the site, or perhaps a proprietary server application that can be connected to. The data can be retrieved in one go, or alternatively it can retrieve it singly each time findNext() is requested.

Then in step 607 on the remote server 501 a search request is performed and once this is done, in step 608 the search module 111 stores data locally e.g. in the provided database 109. In this example, the findFirst() method connects to the portal, and retrieves all the hits. It then calls the findNext() method to return the first set of results. The rest of the procedure then goes as already described in the context of flow chart of Figure 4. However, in step 625, the item to be downloaded is selected instead of launching the media player as done in Figure 4.

Searching on a remote data source via a remote search framework can be performed by providing a search module 111 which handles communication with a remote client application. This is different from the scenario provided in the case where a search is being made on a remote source, which could be anything like a file repository, a server application or indeed any thing that can be connected to and its store of data searched.

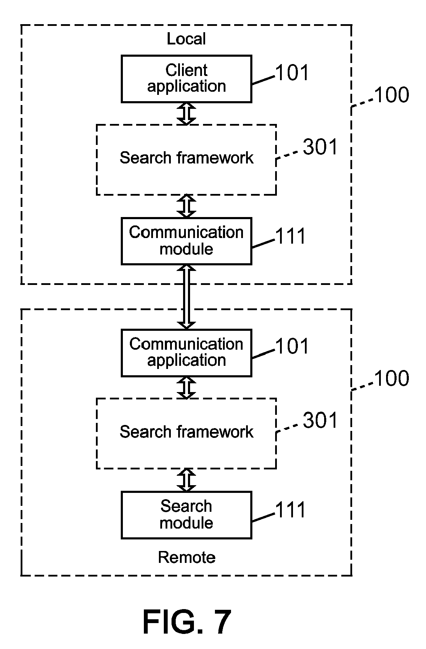

In this scenario the local search framework delegates the search request to the remote client application via a search module 111 so that the remote client application in turn delegates the search request to a client or communicates directly with the remote framework. The connection would be via a specialised search module 111, referred to as the communication module as shown in Figure 7. In Figure 7, on the remote search device, the search application can also be referred to as a communication application.

This remote framework in turn delegates the request to modules as required. Results are then passed back through the chain to the originating client application 101. This scenario holds an efficiency benefit in that data is manipulated by the remote search framework and then only the results are communicated back to the originating search framework. The request to the remote framework can include the search modules 111 that it wants to search as part of the request.

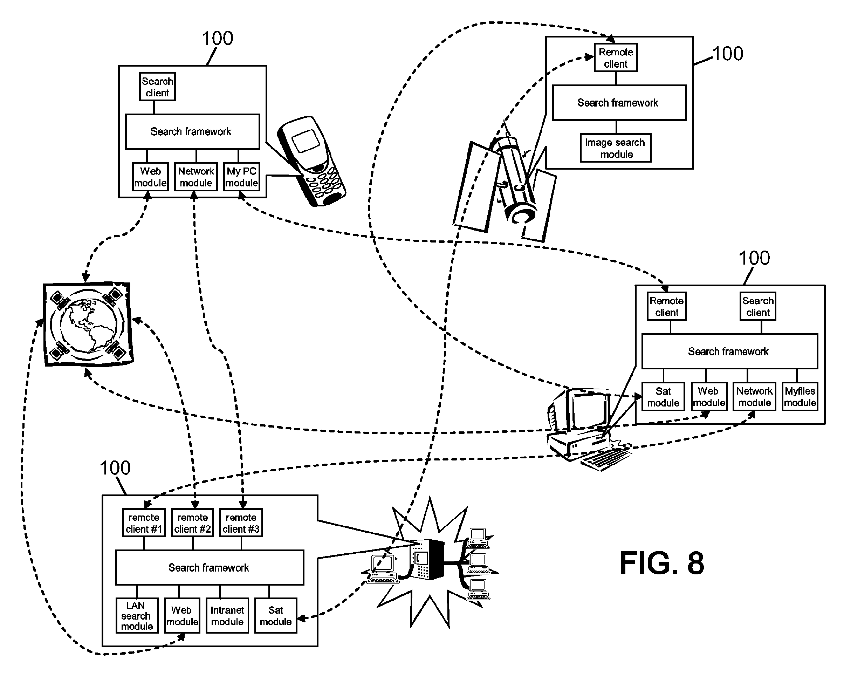

It is also possible to chain together modular distributed search frameworks via their search modules 111 to many others on a variety of devices, from a handheld device to a satellite orbiting the Earth. If the satellite can be connected to, it can be searched. Figure 8 illustrates this scenario. In Figure 8 a chained search is performed via modular distributed search frameworks on various devices. From Figure 8 it can also be seen that depending on where the searched data is located, there can be different kind of search modules, such as web modules, network modules, my PC modules, local area network (LAN) modules, satellite modules, Intranet modules, image search modules and so on. Thus, the search modules 111 can be specific to a data location and/or data type. In case several modular distributed frameworks are chained together, individual devices 100 are arranged to choose the modules 111, initialise the search by using the findFirst() function and use the findNext() function to run the search modules.

Above some embodiments of the invention were described. The described search framework can be deployed on any type of device which may then communicate with each other in a distributed manner. Only the search modules 111 will be specific to each different platform dependant upon the data they are searching. The modules 111 may be deployed at any time on any device that has the modular distributed search framework. If a new application or service is added, a search module 111 can be written for it. The framework will pick these search modules 111 up automatically and thus increasing its ability to search more content instantly. A search module 111 can be written to work across a variety of platforms, as the framework itself defines an interface that a module 111 must adhere to. For instance, if a user wants to search for a ringtone on the local device 100, they can use the teachings of the present invention to do so. If the ringtone was not available on the device 100, then it can prompt the user to search externally on the Internet or specified network, such as mobile phone operators' portals, or indeed on any device.

The modular distributed search framework as described above can advantageously be implemented on a device having constrained resources, such as a mobile device. As these devices are now capable of storing large amounts of data and able to access the internet, it makes the modular distributed search framework an ideal facilitator for searching content locally and remotely.

The implementation has a client user interface, which takes a numeric key and begins a search immediately by calling the search server 104 with a findFirst() request. Any subsequent key presses interrupts and restarts the search. Search results are returned instantly and populated in a list. For instance, if a user selects "6", the search framework will search for any items that match 6 on the phone keypad (6 = "mno6"). This means that any matches that contain these items will be returned. In the case of the example, the results will match to "m", "n", "o", or "6". This means a single key press brings up results instantly and allows the user to get to the desired result much faster.

If a user presses 6 again this time the search framework (using the relevant comparator 108) will then search for a combination of "mno6" and "mno6". If the user was looking for "moon" they would key in four 6's and would receive results for "moon" as well as any other combination that matches, such as "noon" etc.

Due to the modular nature of the search framework, this means that if there is a "moon" in the users address book, music files, on the net etc, the search modules 111 will return varied results that they are responsible for. The benefit of having this modular framework is that any new search modules 111 added makes this a rich search experience.

Furthermore, businesses can advertise services and products easily as each search module 111 is specialised and searches content it has been designed for. For example a music search module 111 may be used to provide a gig guide service, advertise particular artists and songs, suggest alternative items that are related to their search etc. This means businesses can actually generate revenue using these search modules 111.

The invention equally relates to a computer program product that is able to implement any of the method steps of the embodiments of the invention when loaded and run on computer means of the search device 100.

The invention equally relates to a search device 100 that is arranged to implement the method steps described above. The search device 100 may, for instance be a constrained portable device such as a mobile phone handset.

The invention also relates to a communication system as shown in Figures 5, 7 or 8, where there is at least one search device 100 and remote data source 501 or at least two search devices having a communication link between them.

While the invention has been illustrated and described in detail in the drawings and foregoing description, such illustration and description are to be considered illustrative or exemplary and not restrictive; the invention is not restricted to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used.

A computer program may be stored/distributed on a suitable medium supplied together with or as a part of other hardware, but may also be distributed in other forms, such as via the Internet or other wired or wireless telecommunication systems. Any reference signs in the claims should not be construed as limiting the scope of the invention.

## Claims

1. A method of searching content by a communication device (100) comprising one or several search modules (111), each search module being specific to a data type and/or to a data location, the method comprising:
- receiving (201) a search request including specific input parameters;
- applying a first function to said specific parameters for:
- choosing (209) at least one of the search modules (111); and
- initialising (211, 212) the search; and
- using a second function for running (213, 217) the at least one chosen search module (111) for obtaining a search result based on said specific parameters.

2. The method according to claim 1, wherein the specific parameters comprise a search pattern, a search type, a search module list and/or a comparator.

3. The method according to any of the preceding claims, wherein the search initialisation comprises a step of initialising search parameters (211, 212) by using the first function.

4. The method according to claim 3, wherein the search initialisation comprises setting (211) search module counter to 0 and setting (212) current module pointer to null.

5. The method according to any of the preceding claims further comprising interrupting existing searches run by the at least one chosen search module (111).

6. The method according to any of the preceding claims, wherein the method further comprises choosing (205, 206, 207) a comparator (108) for comparing whether a specific string matches with the searched string.

7. The method according to any of the preceding claims, wherein the use of the second function further comprises determining (215) whether the at least one chosen search module (111) has been initialised and, if this is the case, then running (217) the search.

8. The method according to claim 7, wherein in case the at least one chosen search module (111) has not been initialised, then calling the first function for initialising the at least one chosen search module (111).

9. The method according to any of the preceding claims, wherein in case the current search module (111) has finished its search, then incrementing a module counter by 1, resetting the current module to null and determining whether there are any other search modules (111) that have not done their search and in case all the chosen search modules (111) have done their search, then returning the search result.

10. The method according to any of the preceding claims, wherein the method further comprises using (227) a third function applied to at least one of the following: a search module name and to the returned result for performing a specific action for the returned result.

11. The method according to any of the preceding claims, wherein the method further comprises the at least one chosen search module (111) connecting to a physically remote data source for performing the search.

12. The method according to any one of the preceding claims, wherein the method further comprises the at least one chosen search module (111) connecting to another communication device for delegating the search to the other communication device, the other communication device performs the steps of:
- receiving a search request form the communication device (100);
- applying the first function to said specific parameters for
- choosing (209) at least one of the search modules; and
- initialising (211, 212) the search; and
- using the second function for running (213, 217) the at least one chosen search module (111) for obtaining a search result based on said specific parameters; and
- returning the search result to the communication device (100).

13. A computer program product comprising instructions for implementing the steps of a method according to any one of claims 1-12 when loaded and run on computer means of the communication device (100).

14. A communication device (100) arranged for searching content, the communication device (100) comprises:
- at least one search module (111) for running a search, the at least one search module being specific to a data type and/or to a data location;
- means (104) for receiving a search request including specific input parameters;
- means (105) for applying a first function to said specific parameters for choosing at least one of the search modules; and for initialising the search; and
- the search modules (111) are further arranged to use a second function for running (213, 217) the at least one chosen search module (111) for obtaining a search result based on said specific parameters.

15. The communication device (100) according to claim 14 further comprising a comparator (108) for comparing whether a specific string matches with the searched string.

16. The communication device (100) according to any one of claims 14-15 further comprising a search register (107) for providing a list of available search modules (111) to means (105) for applying the first function to said specific parameters.
